# EUROPEAN PATENT APPLICATION

(11) **EP 4 700 330 A1**
(43) Date of publication of application: **25.02.2026**
(21) Application number: 24792555.5
(22) Date of filing: 08.04.2024
(51) Int. Cl.: G01C 3/06, G03B 15/00, G03B 19/06, H04N 23/55, H04N 23/60

(54) **IMAGING DEVICE AND INFORMATION PROCESSING METHOD**

(30) Priority: 20.04.2023 JP 2023069639
(71) Applicant: KYOCERA Corporation, Kyoto 612-8501 (JP)
(72) Inventor: SUGAHARA, Shun, Kyoto-shi, Kyoto 612-8501 (JP)
(74) Representative: Viering, Jentschura & Partner mbB Patent- und Rechtsanwälte
(86) International application number: PCT/JP2024/014328
(87) International publication number: WO 2024/219280

(57) **Abstract**

An imaging apparatus includes a first optical element, a second optical element, a third optical element, a fourth optical element, and a controller. The first optical element forms, as a first image, an image of light coming from a subject on a first light-receiving region of an imaging element. The second optical element forms, as a second image, an image of the light coming from the subject on a second light-receiving region of the imaging element, the second light-receiving region being adjacent to the first light-receiving region. The third optical element reflects at least part of light traveling from the first optical element toward outside the first light-receiving region such that the at least part of the light travels toward inside the first light-receiving region. The fourth optical element reflects at least part of light traveling from the second optical element toward outside the second light-receiving region such that the at least part of the light travels toward inside the second light-receiving region. The controller performs conversion processing including at least inversion and combination on a superimposed image of the first light-receiving region and on a superimposed image of the second light-receiving region, and calculates disparity of the subject by comparing the superimposed images having undergone the conversion processing.

## Description

### CROSS-REFERENCE TO RELATED APPLICATIONS

The present application claims priority to Japanese Patent Application No. 2023-069639, filed on April 20, 2023, the entire disclosure of which is incorporated herein by reference.

### TECHNICAL FIELD

The present disclosure relates to an imaging apparatus and an information processing method.

### BACKGROUND OF INVENTION

A known system enables capturing both images for distance calculation and images for display by using a single imaging apparatus (see, for example, Patent Literature 1).

### CITATION LIST

### PATENT LITERATURE

Patent Literature 1: Japanese Unexamined Patent Application Publication No. 2004-289305

### SUMMARY

(1) According to an embodiment of the present disclosure, an imaging device includes a first optical element, a second optical element, a third optical element, a fourth optical element, and a controller. The first optical element forms, as a first image, an image of light coming from a subject on a first light-receiving region of an imaging element. The second optical element forms, as a second image, an image of the light coming from the subject on a second light-receiving region of the imaging element, the second light-receiving region being adjacent to the first light-receiving region. The third optical element reflects at least part of light traveling from the first optical element toward outside the first light-receiving region such that the at least part of the light travels toward inside the first light-receiving region. The fourth optical element reflects at least part of light traveling from the second optical element toward outside the second light-receiving region such that the at least part of the light travels toward inside the second light-receiving region. The controller performs conversion processing including at least inversion and combination on a superimposed image of the first light-receiving region and on a superimposed image of the second light-receiving region, and calculates disparity of the subject by comparing the superimposed images having undergone the conversion processing.
(2) According to an embodiment of the present disclosure, in (1), the imaging device includes at least one of a fifth optical element or a sixth optical element. In the fifth optical element is disposed to face the third optical element and shields at least part of the light traveling from the first optical element toward outside the first light-receiving region or reflects the at least part of the light such that the at least part of the light travels toward inside the first light-receiving region. The sixth optical element is disposed to face the fourth optical element and shields at least part of the light traveling from the second optical element toward outside the second light-receiving region or reflects the at least part of the light such that the at least part of the light travels toward inside the second light-receiving region.
(3) According to an embodiment of the present disclosure, in (1) or (2), the controller separates a subject image captured only through the first optical element or the second optical element and a subject image captured through the first optical element or the second optical element and also through another optical element other than the first optical element and the second optical element from each other, based on a direction of a calculated disparity.
(4) According to an embodiment of the present disclosure, an information processing method is an information processing method to be performed by an imaging apparatus comprising a first optical element that forms, as a first image, an image of light coming from a subject on a first light-receiving region of an imaging element, a second optical element that forms, as a second image, an image of the light coming from the subject on a second light-receiving region of the imaging element, the second light-receiving region being adjacent to the first light-receiving region, a third optical element that reflects at least part of light traveling from the first optical element toward outside the first light-receiving region such that the at least part of the light travels toward inside the first light-receiving region, a fourth optical element that reflects at least part of light traveling from the second optical element toward outside the second light-receiving region such that the at least part of the light travels toward inside the second light-receiving region, and a controller. The controller performs conversion processing including at least inversion and combination on a superimposed image of the first light-receiving region and on a superimposed image of the second light-receiving region and calculates disparity of the subject by comparing the superimposed images having undergone the conversion processing.

### BRIEF DESCRIPTION OF THE DRAWINGS

FIG. 1 is a side view illustrating a schematic configuration example of an imaging apparatus according to an embodiment of the present disclosure.
FIG. 2 is a diagram illustrating a first image and a second image of the imaging apparatus illustrated in FIG. 1.
FIG. 3 is a diagram illustrating a superimposed image generated by the imaging apparatus illustrated in FIG. 1.
FIG. 4 is a diagram illustrating conversion processing performed by the imaging apparatus illustrated in FIG. 1.
FIG. 5 is a diagram illustrating an example of a converted superimposed image.
FIG. 6 is a flowchart illustrating an example of processing in an information processing method performed by the imaging apparatus.
FIG. 7 is a side view illustrating another schematic configuration example of the imaging apparatus according to an embodiment of the present disclosure.
FIG. 8 is a diagram illustrating a first image and a second image of the imaging apparatus illustrated in FIG. 7.
FIG. 9 is a diagram illustrating a superimposed image generated by the imaging apparatus illustrated in FIG. 7.
FIG. 10 is a diagram illustrating conversion processing performed by the imaging apparatus illustrated in FIG. 7.
FIG. 11 is a side view illustrating another schematic configuration example of the imaging apparatus according to an embodiment of the present disclosure.
FIG. 12 is a diagram illustrating a first image and a second image of the imaging apparatus illustrated in FIG. 11.
FIG. 13 is a diagram illustrating a superimposed image generated by the imaging apparatus illustrated in FIG. 11.
FIG. 14 is a diagram illustrating conversion processing performed by the imaging apparatus illustrated in FIG. 11.
FIG. 15 is a side view illustrating another schematic configuration example of the imaging apparatus according to an embodiment of the present disclosure.
FIG. 16 is a diagram illustrating a first image and a second image of the imaging apparatus illustrated in FIG. 15.
FIG. 17 is a diagram illustrating a superimposed image generated by the imaging apparatus illustrated in FIG. 15.
FIG. 18 is a diagram illustrating conversion processing performed by the imaging apparatus illustrated in FIG. 15.
FIG. 19 is a side view illustrating another schematic configuration example of the imaging apparatus according to an embodiment of the present disclosure.
FIG. 20 is a diagram illustrating a first image and a second image of the imaging apparatus illustrated in FIG. 19.
FIG. 21 is a diagram illustrating a superimposed image generated by the imaging apparatus illustrated in FIG. 19.
FIG. 22 is a diagram illustrating conversion processing performed by the imaging apparatus illustrated in FIG. 19.
FIG. 23 is a side view illustrating another schematic configuration example of an imaging apparatus according to an embodiment of the present disclosure.
FIG. 24 is a diagram illustrating a first image and a second image of the imaging apparatus illustrated in FIG. 23.
FIG. 25 is a diagram illustrating a superimposed image generated by the imaging apparatus illustrated in FIG. 23.
FIG. 26 is a diagram illustrating conversion processing performed by the imaging apparatus illustrated in FIG. 23.
FIG. 27 is a diagram illustrating a variation related to a mirror of an imaging apparatus according to an embodiment of the present disclosure.

### DESCRIPTION OF EMBODIMENTS

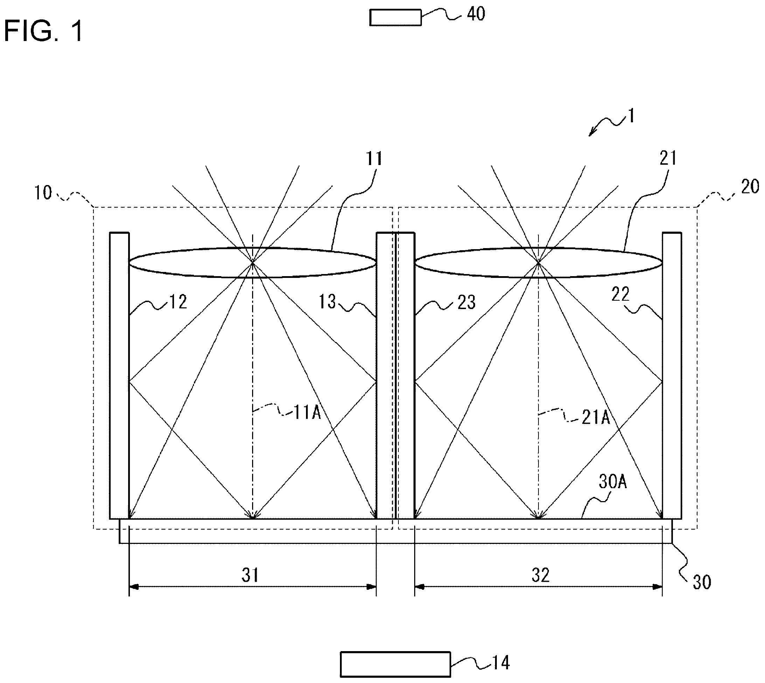

An imaging apparatus 1 (see FIG. 1) and an information processing method according to an embodiment of the present disclosure will be described below with reference to the drawings. In the drawings that will be referred to in the following description, the same components are denoted by the same reference signs. The drawings each illustrating an embodiment are schematic. The dimensional ratios and other proportions in the drawings are not necessarily identical to those of the actual objects.

According to the present embodiment, the imaging apparatus 1 captures a disparity image of a subject 40 (see FIG. 1). For example, based on a disparity image of the subject 40, a distance to each point of the subject 40, which is a distance measurement target, can be calculated. In distance measurement based on a disparity image, resolution and accuracy of distance data are improved as a baseline length increases. A baseline length corresponds to a distance between devices that capture two images constituting a disparity image.

As a method for capturing a disparity image to generate distance measurement data, for example, a method using a stereo camera may be considered. A stereo camera is a technique for performing triangulation using two cameras arranged in parallel to each other. In the stereo camera, a distance between the two cameras corresponds to a baseline length. Accordingly, the resolution and accuracy of distance data can be improved by increasing the baseline length of the stereo camera. However, when the baseline length of the stereo camera is increased, the two cameras need to be arranged apart from each other, resulting in an increase in device size. In recent years, further miniaturization has been demanded, and an increase in device size is undesirable. Here, a method of increasing a focal length may be considered in order to improve the resolution and accuracy of distance data. However, increasing the focal length makes wide-angle image capturing difficult. In other words, with a stereo camera having a configuration of the related art, achieving wide-angle image capturing or improved resolution and accuracy of distance data is difficult.

According to the present embodiment, the imaging apparatus 1 may achieve wide-angle image capturing and improved resolution and accuracy of distance data without an increase in device size. In other words, according to the present embodiment, the imaging apparatus 1 can obtain an image having a resolution of a long-focus optical system while maintaining a wide angle, by the configuration described below. Specific configuration examples of the imaging apparatus 1 will be described below.

### (First Configuration Example)

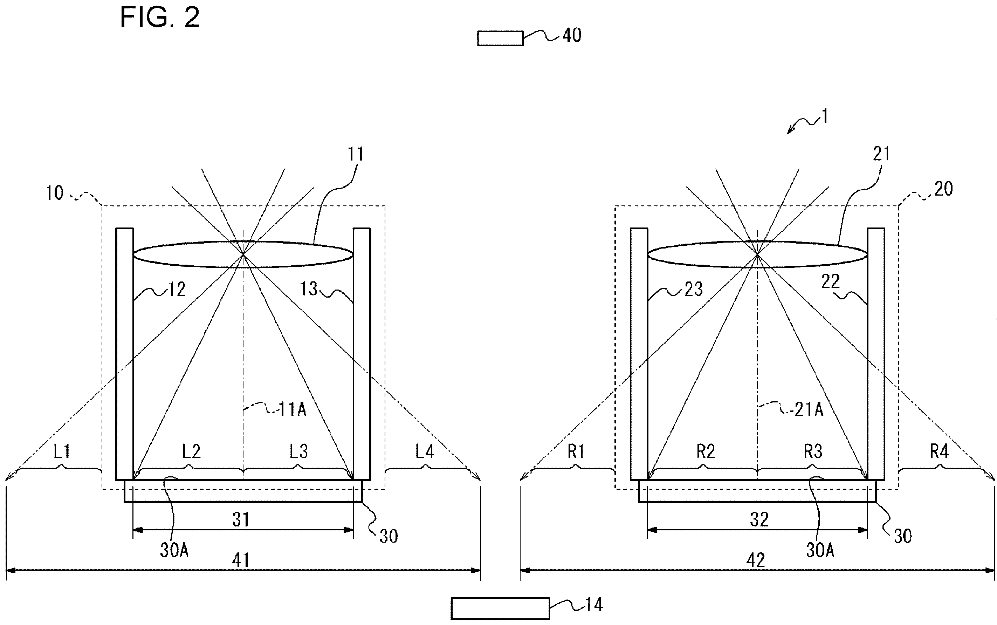

As illustrated in FIG. 1, according to the present embodiment, the imaging apparatus 1 includes a first optical system 10, a second optical system 20, and a controller 14. The imaging apparatus 1 may further include an imaging element 30. The optical systems are also referred to as optical devices. In the imaging apparatus 1, the first optical system 10 and the second optical system 20 each form an image of the subject 40, and the imaging element 30 captures the formed images. As a result, the imaging apparatus 1 can capture, as a disparity image, an image obtained by capturing the image formed by the first optical system 10 and an image obtained by capturing the image formed by the second optical system 20. The image formed by the first optical system 10 is also referred to as a first image 41. The image formed by the second optical system 20 is also referred to as a second image 42. FIG. 2 is a diagram illustrating the first image 41 and the second image 42 of the imaging apparatus 1 illustrated in FIG. 1. In FIG. 2, for the purpose of describing the first image 41 and the second image 42, the first optical system 10 and the second optical system 20 are illustrated as being virtually separated from each other, and the state in which light virtually travels straight and in which a subject image is formed at the position of the imaging element 30 is illustrated. The image obtained by capturing the first image 41 is also referred to as a first image. The image obtained by capturing the second image 42 is also referred to as a second image. The disparity image is composed of the first image and the second image.

The imaging element 30 includes a light-receiving region 30A. The imaging element 30 captures an image of light incident on the light-receiving region 30A. The light-receiving region 30A is also referred to as an imaging region. The imaging element 30 may be capable of capturing an image formed by visible light or invisible light, such as infrared light or ultraviolet light. The imaging element 30 may include, for example, a CCD (charge-coupled device) image sensor or a CMOS (complementary metal oxide semiconductor) image sensor. The imaging element 30 may be a color image sensor. The light-receiving region 30A of the imaging element 30 may include multiple pixels. The imaging element 30 generates an image signal on the basis of an electrical signal output by each of the pixels in accordance with the amount of light incident on each of the pixels. The imaging element 30 may generate an image signal at a predetermined frame rate such as 30 fps (frames per second).

The light-receiving region 30A includes a first light-receiving region 31 and a second light-receiving region 32. The first light-receiving region 31 and the second light-receiving region 32 do not overlap each other on the light-receiving region 30A. In addition, the area of the first light-receiving region 31 and the area of the second light-receiving region 32 may be equal to each other. The first light-receiving region 31 and the second light-receiving region 32 may be adjacent to each other. The first light-receiving region 31 and the second light-receiving region 32 are distinguished from each other for convenience of description. In the actual light-receiving region 30A, the first light-receiving region 31 and the second light-receiving region 32 are not necessarily distinguishable from each other.

The first optical system 10 includes a first optical element 11. The first optical element 11 includes an optical axis 11A. The first optical element 11 forms an image of light or a light beam coming from the subject 40 onto the first light-receiving region 31 included in the light-receiving region 30A of the imaging element 30.

The first optical element 11 may include at least one lens. The first optical element 11 may include various lenses such as a convex lens and a concave lens. The first optical element 11 may include various mirrors such as a convex mirror, a concave mirror, and a plane mirror. The first optical element 11 may include a diaphragm. The first optical element 11 is not limited to including these components and may include various other elements.

The first optical element 11 forms an image of the subject 40 onto the light-receiving region 30A as the first image 41. The first optical system 10 is not necessarily image-side telecentric. In other words, an angle of the direction of a chief ray of any light beam passing through the first optical system 10 with respect to the optical axis 11A of the first optical element 11 may be greater than 0 degrees. Alternatively, the first optical system 10 may be image-side telecentric.

The second optical system 20 includes a second optical element 21. The second optical element 21 includes an optical axis 21A. The second optical element 21 forms an image of light or a light beam coming from the subject 40 onto the second light-receiving region 32 included in the light-receiving region 30A of the imaging element 30.

The second optical element 21 may include at least one lens. The second optical element 21 may include various lenses such as a convex lens and a concave lens. The second optical element 21 may include various mirrors such as a convex mirror, a concave mirror, and a plane mirror. The second optical element 21 may include a diaphragm. The second optical element 21 is not limited to including these components and may include various other elements.

The second optical element 21 forms an image of the subject 40 onto the light-receiving region 30A as the second image 42. The second optical system 20 is not necessarily image-side telecentric. In other words, an angle of the direction of a chief ray of any light beam passing through the second optical system 20 with respect to the optical axis 21A of the second optical element 21 may be greater than 0 degrees. Alternatively, the second optical system 20 may be image-side telecentric.

Some of light rays that are imaged as the first image 41 travel from the first optical element 11 toward the outside of the light-receiving region 30A. The first optical system 10 further includes a third optical element 12. The third optical element 12 is configured as a mirror whose surface closer to the first light-receiving region 31 serves as a reflective surface. In the configuration example illustrated in FIG. 1, the third optical element 12 is a plane mirror. The third optical element 12 reflects at least part of the light traveling from the first optical element 11 toward the outside of the first light-receiving region 31 and causes the light to travel toward the inside (inner side) of the first light-receiving region 31. The light rays reflected by the third optical element 12 are imaged inside the first light-receiving region 31. An image formed by the light rays reflected by the third optical element 12 corresponds to an image obtained by folding back an image (L1 in FIG. 2) formed outside the first light-receiving region 31 into the first light-receiving region 31. The image folded back into the first light-receiving region 31 will be denoted as "[L1]", with the parentheses indicating that the image is folded back (inverted).

Some of light rays that are imaged as the second image 42 travel from the second optical element 21 toward the outside of the light-receiving region 30A. The second optical system 20 further includes a fourth optical element 22. The fourth optical element 22 is configured as a mirror whose surface closer to the second light-receiving region 32 serves as a reflective surface. In the configuration example illustrated in FIG. 1, the fourth optical element 22 is a plane mirror. The fourth optical element 22 reflects at least part of the light traveling from the second optical element 21 toward the outside of the second light-receiving region 32 and causes the light to travel toward the inside (inner side) of the second light-receiving region 32. The light rays reflected by the fourth optical element 22 are imaged inside the second light-receiving region 32. An image formed by the light rays reflected by the fourth optical element 22 corresponds to an image obtained by folding back an image (R4 in FIG. 2) formed outside the second light-receiving region 32 into the second light-receiving region 32. The image folded back into the second light-receiving region 32 will be denoted as "[R4]", with the parentheses indicating that the image is folded back (inverted).

The imaging apparatus 1 may include at least one of a fifth optical element 13 or a sixth optical element 23. In the configuration example illustrated in FIG. 1, the imaging apparatus 1 includes the fifth optical element 13 and the sixth optical element 23. Each of the fifth optical element 13 and the sixth optical element 23 may be configured as a mirror having a reflective surface. For example, the fifth optical element 13 and the sixth optical element 23 may be integrated as a single double-sided mirror.

The fifth optical element 13 is configured as a mirror whose surface closer to the first light-receiving region 31 serves as a reflective surface. In the configuration example illustrated in FIG. 1, the fifth optical element 13 is a plane mirror. The fifth optical element 13 is disposed to face the third optical element 12 and reflects at least part of the light traveling from the first optical element 11 toward the outside of the first light-receiving region 31 and causes the light to travel toward the inside (inner side) of the first light-receiving region 31. The light rays reflected by the fifth optical element 13 are imaged inside the first light-receiving region 31. An image formed by the light rays reflected by the fifth optical element 13 corresponds to an image obtained by folding back an image (L4 in FIG. 2) formed outside the first light-receiving region 31 into the first light-receiving region 31. The image folded back into the first light-receiving region 31 will be denoted as "[L4]", with the parentheses indicating that the image is folded back (inverted).

The sixth optical element 23 is configured as a mirror whose surface closer to the second light-receiving region 32 serves as a reflective surface. In the configuration example illustrated in FIG. 1, the sixth optical element 23 is a plane mirror. The sixth optical element 23 is disposed to face the fourth optical element 22 and reflects at least part of the light traveling from the second optical element 21 toward the outside of the second light-receiving region 32 and causes the light to travel toward the inside (inner side) of the second light-receiving region 32. The light rays reflected by the sixth optical element 23 are imaged inside the second light-receiving region 32. An image formed by the light rays reflected by the sixth optical element 23 corresponds to an image obtained by folding back an image (R1 in FIG. 2) formed outside the second light-receiving region 32 into the second light-receiving region 32. The image folded back into the second light-receiving region 32 will be denoted as "[R1]", with the parentheses indicating that the image is folded back (inverted).

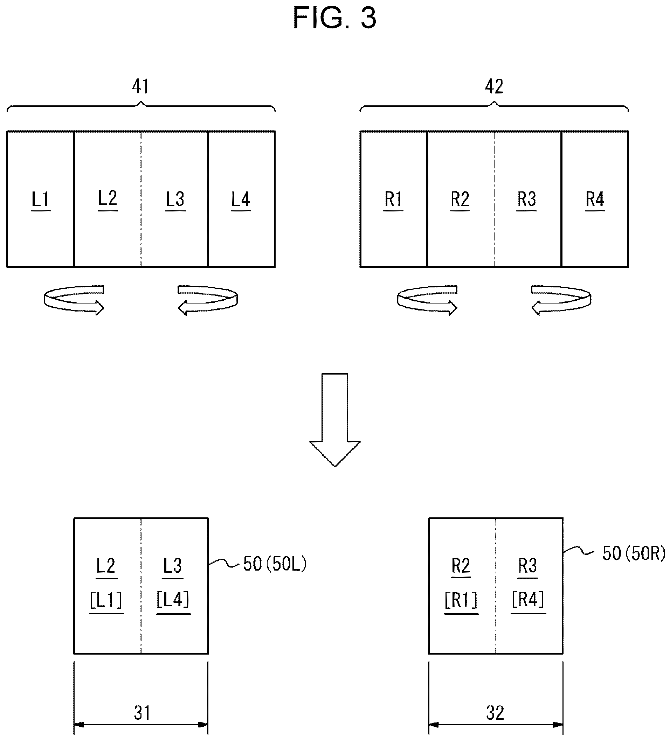

The imaging element 30 captures an image formed on the light-receiving region 30A and generates a captured image. FIG. 3 is a diagram illustrating a superimposed image 50 generated by the imaging apparatus 1 illustrated in FIG. 1. The captured image includes a superimposed image 50L in which an image formed on the first light-receiving region 31 by light coming from the subject 40 and passing through another optical element is superimposed on an image formed on the first light-receiving region 31 by the light coming from the subject 40, passing through the first optical element 11, and not passing through another optical element. The captured image includes a superimposed image 50R in which an image formed on the second light-receiving region 32 by the light coming from the subject 40 and passing through another optical element is superimposed on an image formed on the second light-receiving region 32 by the light coming from the subject 40, passing through the second optical element 21, and not passing through another optical element. When there is no need to distinguish the superimposed image 50L and the superimposed image 50R from each other, they may sometimes be collectively referred to as superimposed images 50.

As illustrated in FIG. 3, the first image 41 includes images L1, L2, L3, and L4. The image L1 is folded back by the third optical element 12 and imaged on the first light-receiving region 31 as an inverted image [L1]. The inverted image [L1] is superimposed on the image L2 that is an image formed on the first light-receiving region 31 by the light passing through the first optical element 11 without passing through another optical element. The image L4 is folded back by the fifth optical element 13 and imaged on the first light-receiving region 31 as an inverted image [L4]. The inverted image [L4] is superimposed on the image L3 that is an image formed on the first light-receiving region 31 by the light passing through the first optical element 11 without passing through another optical element. The imaging element 30 generates the superimposed image 50L including the images [L1], L2, L3, and [L4].

As illustrated in FIG. 3, the second image 42 includes images R1, R2, R3, and R4. The image R4 is folded back by the fourth optical element 22 and imaged on the second light-receiving region 32 as an inverted image [R4]. The inverted image [R4] is superimposed on the image R3 that is an image formed on the second light-receiving region 32 by the light passing through the second optical element 21 without passing through another optical element. The image R1 is folded back by the sixth optical element 23 and imaged on the second light-receiving region 32 as an inverted image [R1]. The inverted image [R1] is superimposed on the image R2 that is an image formed on the second light-receiving region 32 by the light passing through the second optical element 21 without passing through another optical element. The imaging element 30 generates the superimposed image 50R including the images [R1], R2, R3, and [R4].

In the superimposed images 50 illustrated in FIG. 3, the third optical element 12, the fourth optical element 22, the fifth optical element 13, and the sixth optical element 23 are arranged such that each of them folds back an image in the horizontal direction. However, they may be arranged such that each of them folds back an image in the vertical direction in FIG. 3.

The light-receiving region 30A of the imaging element 30 captures images formed on the light-receiving region 30A by the first optical system 10 and the second optical system 20 from light or a light beam coming from the subject 40. Conversely, a range in which light or a light beam can be formed by the first optical system 10 and the second optical system 20 as images to be captured on the light-receiving region 30A corresponds to an angle of view of the imaging apparatus 1. A range in which images are directly formed on the light-receiving region 30A through the first optical element 11 and the second optical element 21 without passing through optical elements other than the first optical element 11 and the second optical element 21 is also referred to as a direct angle of view.

According to the present embodiment, the imaging apparatus 1 can perform image capturing by causing light or a light beam incident on the first optical system 10 and the second optical system 20 from outside the direct angle of view to travel toward the light-receiving region 30A and to be formed as images by using an optical element other than the first optical element 11 and the second optical element 21. As a result, the angle of view can be widened without changing the focal length. In other words, an image that has the resolution of a long-focus optical system can be obtained while maintaining a wide angle. Since changing the focal length is unnecessary, widening the angle of view has less impact on the resolution and accuracy of distance measurement based on a disparity image captured by the imaging apparatus 1.

The imaging apparatus 1 includes the controller 14 that controls the imaging apparatus 1. The controller 14 includes at least one processor, at least one dedicated circuit, or a combination thereof. The processor is a general-purpose processor, such as a CPU (central processing unit) or a GPU (graphics processing unit), or a dedicated processor specialized for a particular process. The dedicated circuit may be, for example, an FPGA (field-programmable gate array) or an ASIC (application specific integrated circuit). In the present embodiment, the controller 14 performs information processing (image processing) on a captured image acquired from the imaging element 30.

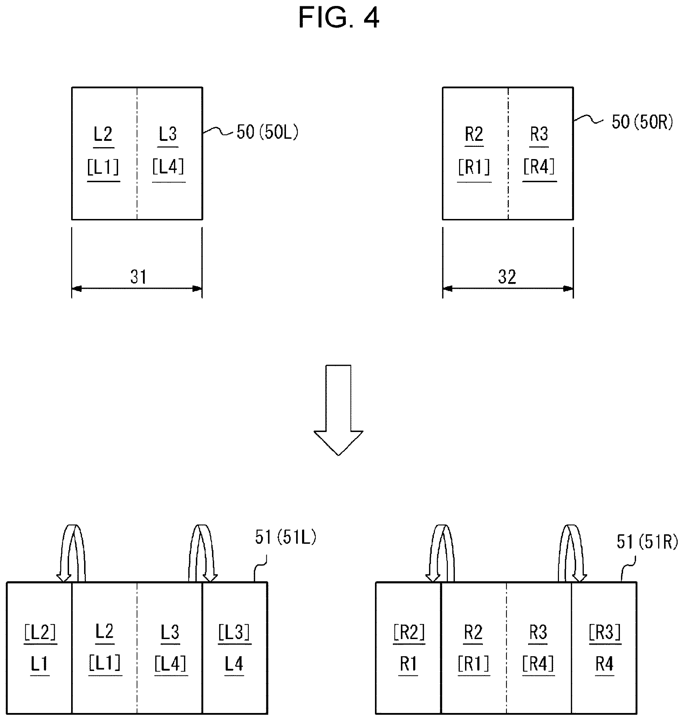

The controller 14 performs conversion processing including at least inversion and combination on the superimposed image 50L of the first light-receiving region 31 and the superimposed image 50R of the second light-receiving region 32, and calculates disparity of the subject 40 by comparing the superimposed images 50 having undergone the conversion processing. FIG. 4 is a diagram illustrating the conversion processing performed by the imaging apparatus 1 illustrated in FIG. 1. The controller 14 inverts (folds back) a portion of the superimposed image 50L, the portion including [L1], in an outward direction and combines it. The controller 14 also inverts (folds back) a portion of the superimposed image 50L, the portion including [L4], in an outward direction and combines it. A converted superimposed image 51L is the superimposed image 50L that has undergone the conversion processing. The converted superimposed image 51L includes the images L1, L2, L3, and L4 in the same arrangement as in the first image 41. In other words, although inverted images are superimposed, the converted superimposed image 51L is an image including correct position information of the subject 40.

The controller 14 inverts (folds back) a portion of the superimposed image 50R, the portion including [R1], in an outward direction and combines it. The controller 14 also inverts a portion of the superimposed image 50R, the portion including [R4], in an outward direction and combines it. A converted superimposed image 51R is the superimposed image 50R that has undergone the conversion processing. The converted superimposed image 51R includes the images R1, R2, R3, and R4 in the same arrangement as in the second image 42. In other words, although inverted images are superimposed, the converted superimposed image 51R is an image including correct position information of the subject 40. When there is no need to distinguish the converted superimposed image 51L and the converted superimposed image 51R from each other, they may sometimes be collectively referred to as converted superimposed images 51.

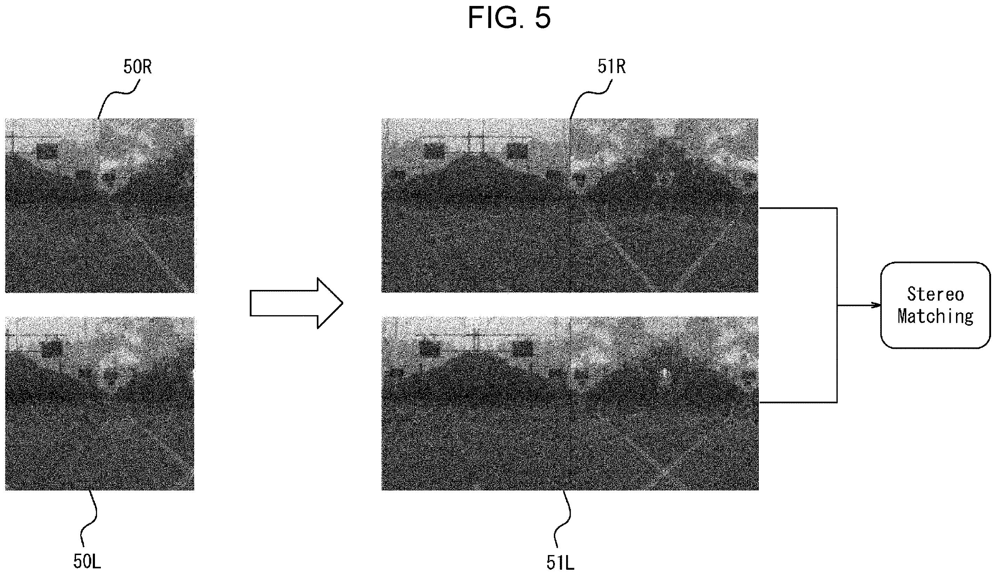

FIG. 5 is a diagram illustrating an example of the converted superimposed images 51. The controller 14 calculates disparity by performing, for example, a known stereo matching process. In the stereo matching process, the controller 14 may use one of the converted superimposed image 51L and the converted superimposed image 51R as a reference image and the other as a comparison image. The controller 14 can calculate a difference (disparity) in position on image between corresponding portions of the reference and comparison images. The controller 14 can also calculate distance information to a target based on the principle of triangulation using disparity calculated thereby. Here, which of the converted superimposed image 51L and the converted superimposed image 51R corresponds to the right-eye side or the left-eye side of the imaging apparatus 1 configured as a stereo camera is known. Accordingly, in the comparison between the reference image and the comparison image, the controller 14 can determine beforehand, based on the disparity, which direction the subject 40 will move. As illustrated in FIG. 4, although each of the converted superimposed images 51 includes the inverted images, a direction in which an inverted image of the subject 40 moves due to disparity is opposite to a direction of disparity previously calculated (a correct direction of movement of the image of the subject 40). Therefore, the controller 14 can avoid erroneously calculating disparity for the inverted image of the subject 40 by performing a comparison with the direction of the previously calculated disparity.

The controller 14 may separate a subject image captured only through the first optical element 11 or the second optical element 21 and a subject image captured through the first optical element 11 or the second optical element 21 and also through another optical element other than the first optical element 11 and the second optical element 21 from each other. The controller 14 may perform processing to separate subject images, that is, to remove inverted subject images, by applying an image processing method such as independent component analysis, a wavelet method, or an image separation model to the converted superimposed image 51L or the converted superimposed image 51R. The image separation model is, for example, a model constructed by generating beforehand an image in which multiple images are superimposed, and learning multiple correct images separated from the image, which is created beforehand. The image separation model may be a model applying Pix-to-Pix, which causes a generator that generates an image and a discriminator that determines whether the generated image is a fake image to compete against each other to generate a pair of images that reflect their relationship.

Here, also in the processing to separate subject images, the controller 14 may use the above-mentioned direction of the calculated disparity (the correct direction of movement of the image of the subject 40). As described above, by the comparison between the converted superimposed image 51L and the converted superimposed image 51R, the image of the subject 40 moves in the direction of the calculated disparity, and the inverted image of the subject 40 moves in the opposite direction. Therefore, on the basis of the direction of the calculated disparity, the controller 14 can identify the inverted image of the subject 40 and remove it from each of the converted superimposed images 51.

The controller 14 may separate the converted superimposed images 51 to output at least one of the first image 41 without superimposition or the second image 42 without superimposition. As described above, the controller 14 can calculate distance information to a target based on the principle of triangulation.

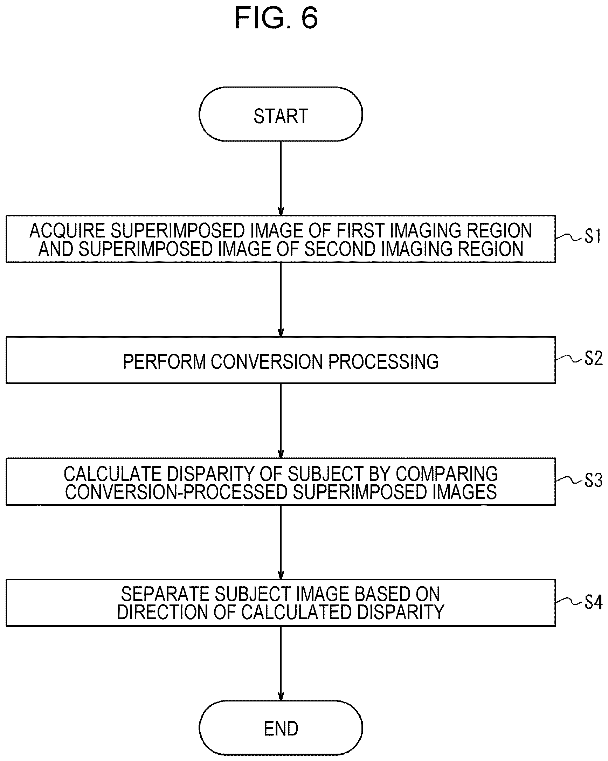

FIG. 6 is a flowchart illustrating an example of processing in the information processing method performed by the imaging apparatus 1. To obtain a reconstructed image from which an inverted image of the subject 40 has been removed, the controller 14 can perform the processing illustrated in the flowchart in FIG. 6.

The controller 14 acquires the superimposed image 50L of the first light-receiving region 31 and the superimposed image 50R of the second light-receiving region 32 (step S1). The controller 14 performs conversion processing including at least inversion and combination as mentioned above (step S2). The converted superimposed image 51L and the converted superimposed image 51R are obtained through the conversion processing. The controller 14 calculates disparity of the subject 40 by comparing the converted superimposed image 51L and the converted superimposed image 51R (step S3). In the calculation of the disparity, a stereo matching process or the like may be performed. On the basis of the direction of the calculated disparity, the controller 14 separates a subject image (image of the subject 40) to obtain a reconstructed image. In the separation of the subject image, an image processing method such as independent component analysis, a wavelet method, or an image separation model may be applied.

### (Second Configuration Example)

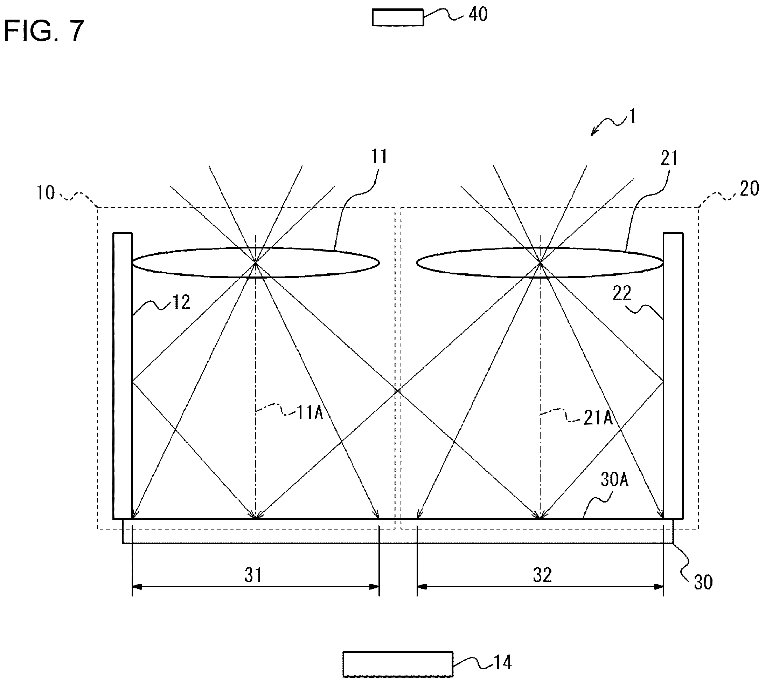

The imaging apparatus 1 according to the second configuration example will be described with reference to FIG. 7 to FIG. 10. FIG. 7 to FIG. 10 are diagrams same as, and/or similar to, FIG. 1 to FIG. 4, respectively, and the same elements are denoted by the same reference signs. To avoid redundancy, descriptions of elements same as, and/or similar to, those of the first configuration example will be omitted or simplified, and differences from the first configuration example will mainly be described.

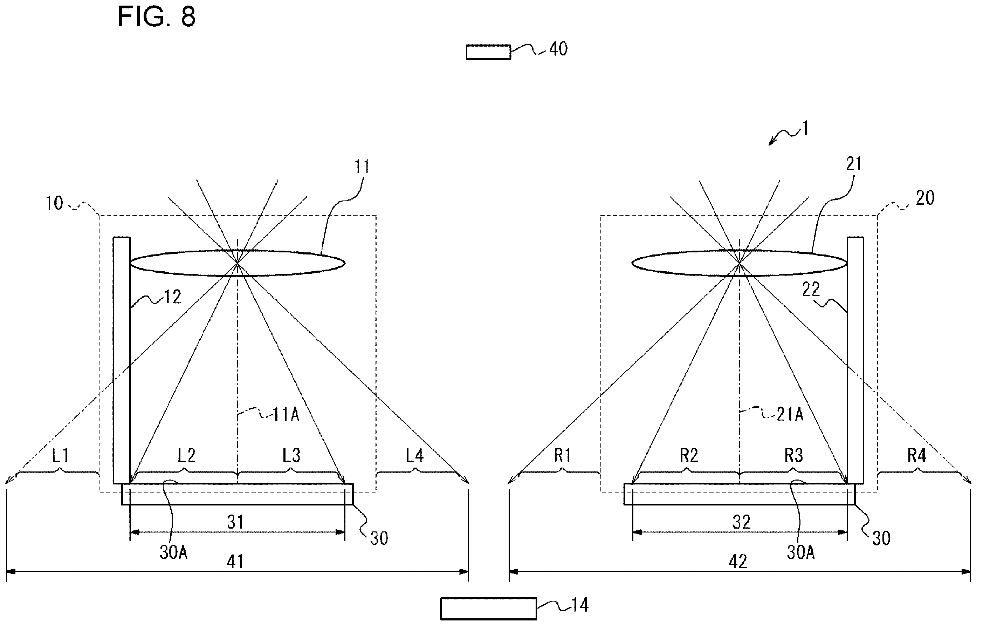

As illustrated in FIG. 7 and FIG. 8, the fifth optical element 13 and the sixth optical element 23 are not necessarily included in the imaging apparatus 1. A portion of the first image 41 is formed on the first light-receiving region 31. A portion of the first image 41 is formed on a portion of the second light-receiving region 32. In other words, the first optical element 11 forms an image of the light or the light beam coming from the subject 40 as the first image 41 in a region wider than the first light-receiving region 31. A portion of the second image 42 is formed on the second light-receiving region 32. A portion of the second image 42 is formed on a portion of the first light-receiving region 31. In other words, the second optical element 21 forms an image of the light or the light beam coming from the subject 40 as the second image 42 in a region wider than the second light-receiving region 32.

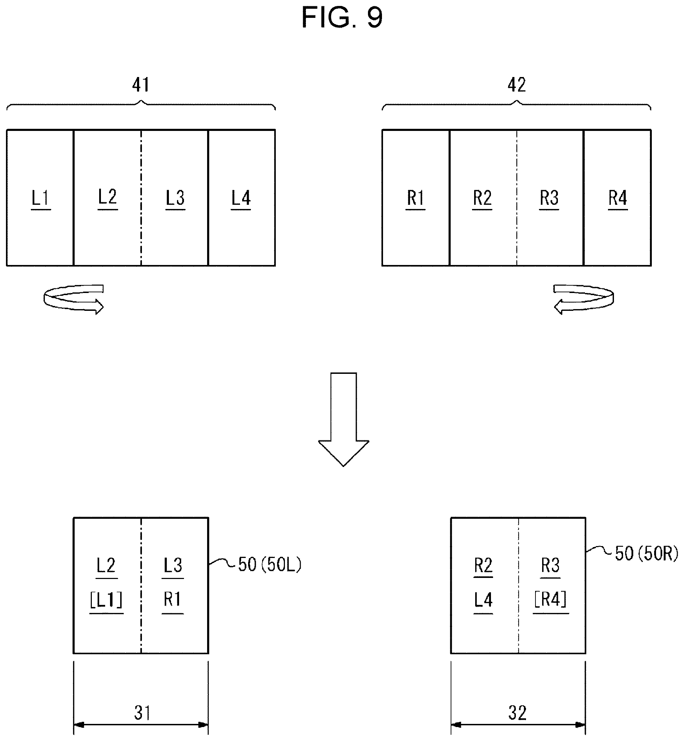

As illustrated in FIG. 9, the first image 41 includes the images L1, L2, L3, and L4. The image L1 is folded back by the third optical element 12 and imaged on the first light-receiving region 31 as the inverted image [L1]. The inverted image [L 1] is superimposed on the image L2, which is an image formed on the first light-receiving region 31 by the light passing through the first optical element 11 without passing through another optical element. The image R1, which is a portion of the second image 42, is formed on the first light-receiving region 31. The image R1 is superimposed on the image L3, which is an image formed on the first light-receiving region 31 by the light passing through the first optical element 11 without passing through another optical element. The imaging element 30 generates the superimposed image 50L including the images [L1], L2, L3, and R1.

As illustrated in FIG. 9, the second image 42 includes the images R1, R2, R3, and R4. The image R4 is folded back by the fourth optical element 22 and imaged on the second light-receiving region 32 as the inverted image [R4]. The inverted image [R4] is superimposed on the image R3 that is an image formed on the second light-receiving region 32 by the light passing through the second optical element 21 without passing through another optical element. The image L4, which is a portion of the first image 41, is formed on the second light-receiving region 32. The image L4 is superimposed on the image R2, which is an image formed on the second light-receiving region 32 by the light passing through the second optical element 21 without passing through another optical element. The imaging element 30 generates the superimposed image 50R including the images L4, R2, R3, and [R4].

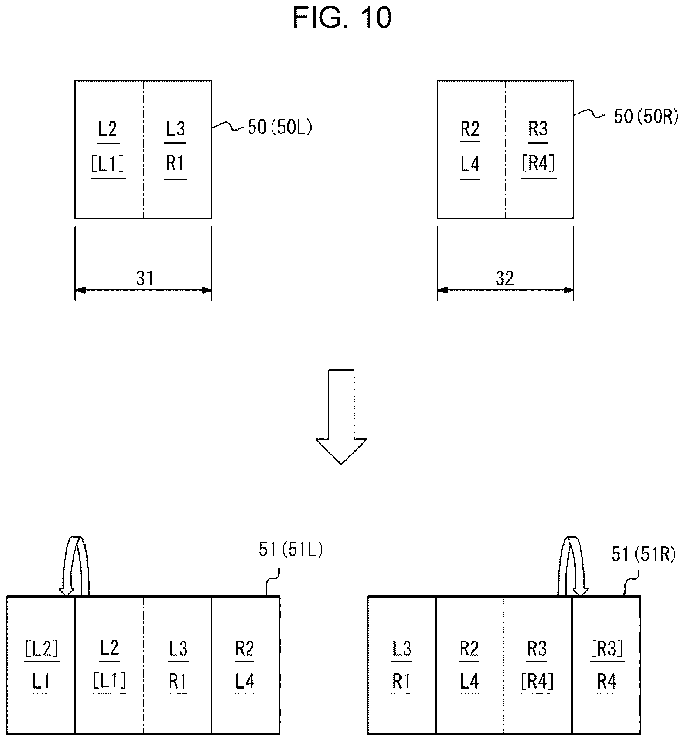

FIG. 10 is a diagram illustrating the conversion processing performed by the imaging apparatus 1 illustrated in FIG. 7. The controller 14 inverts a portion of the superimposed image 50L, the portion including [L1], in an outward direction and combines it. The controller 14 extracts a portion including L4 from the superimposed image 50R and combines it in an outward direction of a portion of the superimposed image 50L, the portion including L3. The converted superimposed image 51L includes the images L1, L2, L3, and L4 in the same arrangement as in the first image 41. In other words, although inverted images are superimposed, the converted superimposed image 51L is an image including correct position information of the subject 40.

The controller 14 also inverts a portion of the superimposed image 50R, the portion including [R4], in an outward direction and combines it. The controller 14 extracts a portion including R1 from the superimposed image 50L and combines it in an outward direction of a portion of the superimposed image 50R, the portion including R2. The converted superimposed image 51R includes the images R1, R2, R3, and R4 in the same arrangement as in the second image 42. In other words, although inverted images are superimposed, the converted superimposed image 51R is an image including correct position information of the subject 40.

As in the first configuration example, the controller 14 calculates disparity of the subject 40 by comparing the converted superimposed images 51. As in the first configuration example, the controller 14 may separate a subject image captured only through the first optical element 11 or the second optical element 21 and a subject image captured through the first optical element 11 or the second optical element 21 and also through another optical element other than the first optical element 11 and the second optical element 21 from each other.

### (Third Configuration Example)

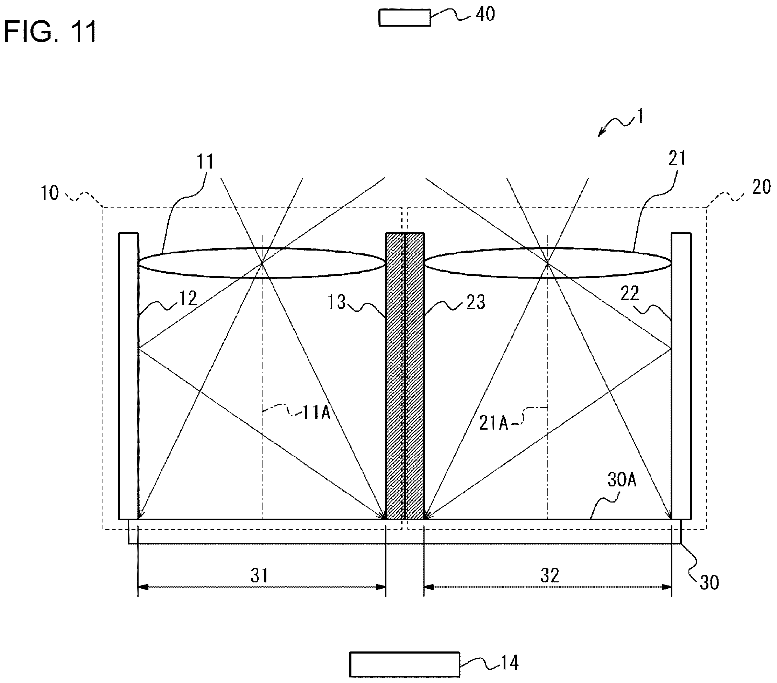

The imaging apparatus 1 according to the third configuration example will be described with reference to FIG. 11 to FIG. 14. FIG. 11 to FIG. 14 are diagrams same as, and/or similar to, FIG. 1 to FIG. 4, respectively, and the same elements are denoted by the same reference signs. To avoid redundancy, descriptions of elements same as, and/or similar to, those of the first configuration example will be omitted or simplified, and differences from the first configuration example will mainly be described.

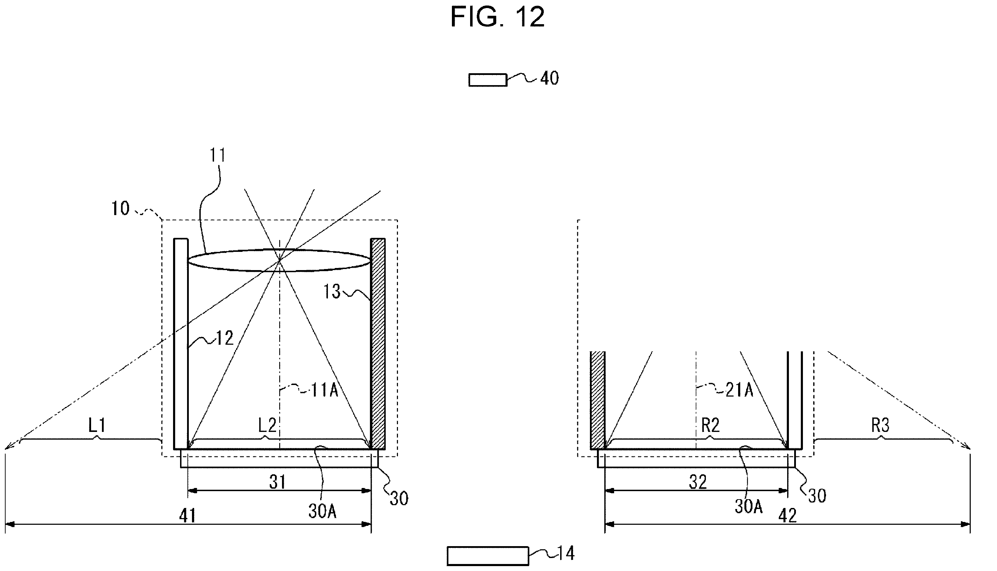

As illustrated in FIG. 11 and FIG. 12, the imaging apparatus 1 may include the fifth optical element 13 and the sixth optical element 23 that are light-shielding members. The fifth optical element 13 is disposed to face the third optical element 12 and shields at least part of the light traveling from the first optical element 11 toward the outside of the first light-receiving region 31. The sixth optical element 23 is disposed to face the fourth optical element 22 and shields at least part of the light traveling from the second optical element 21 toward the outside of the second light-receiving region 32.

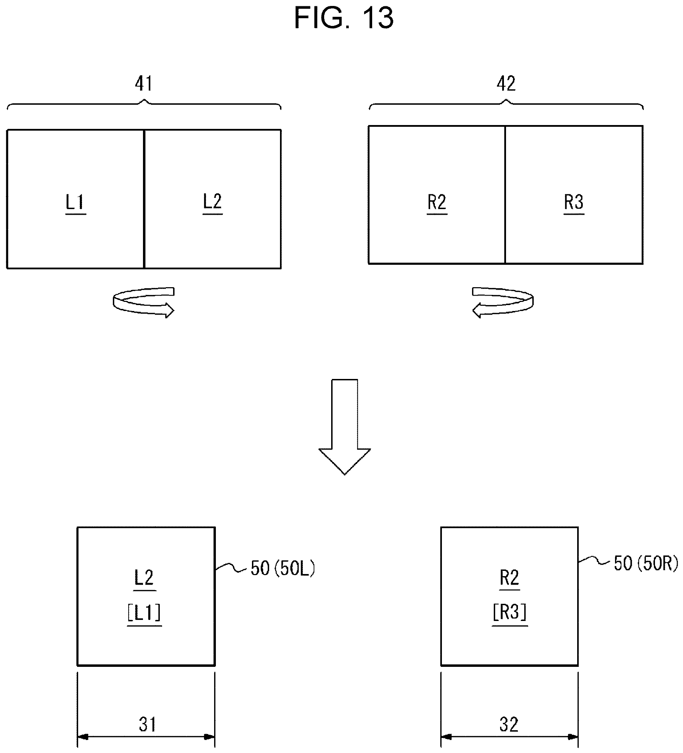

As illustrated in FIG. 13, the first image 41 includes the images L1 and L2. The image L1 is folded back by the third optical element 12 and imaged on the first light-receiving region 31 as the inverted image [L1]. The inverted image [L 1] is superimposed on the image L2, which is an image formed on the first light-receiving region 31 by the light passing through the first optical element 11 without passing through another optical element. The imaging element 30 generates the superimposed image 50L including the images [L1] and L2.

As illustrated in FIG. 13, the second image 42 includes the images R2 and R3. The image R3 is folded back by the fourth optical element 22 and imaged on the second light-receiving region 32 as an inverted image [R3]. The inverted image [R3] is superimposed on the image R2, which is an image formed on the second light-receiving region 32 by the light passing through the second optical element 21 without passing through another optical element. The imaging element 30 generates the superimposed image 50R including the images R2 and [R3].

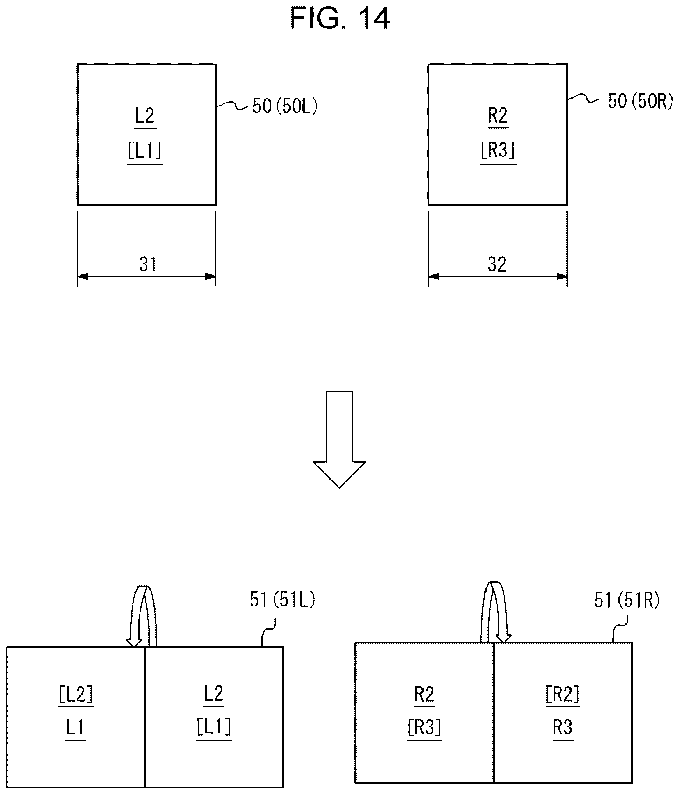

FIG. 14 is a diagram illustrating the conversion processing performed by the imaging apparatus 1 illustrated in FIG. 11. The controller 14 inverts a portion of the superimposed image 50L (the entire superimposed image 50L in the example illustrated in FIG. 14), the portion including [L1], in an outward direction and combines it. The converted superimposed image 51L includes the images L1 and L2 in the same arrangement as in the first image 41. In other words, although inverted images are superimposed, the converted superimposed image 51L is an image including correct position information of the subject 40.

The controller 14 inverts a portion of the superimposed image 50R (the entire superimposed image 50R in the example illustrated in FIG. 14), the portion including [R3], in an outward direction and combines it. The converted superimposed image 51R includes the images R2 and R3 in the same arrangement as in the second image 42. In other words, although inverted images are superimposed, the converted superimposed image 51R is an image including correct position information of the subject 40.

Before calculating disparity of the subject 40, the controller 14 may separate a subject image captured only through the first optical element 11 or the second optical element 21 and a subject image captured through the first optical element 11 or the second optical element 21 and also through another optical element other than the first optical element 11 and the second optical element 21 from each other. This can expand a disparity calculation (distance measurement) range on near-distance side.

### (Fourth Configuration Example)

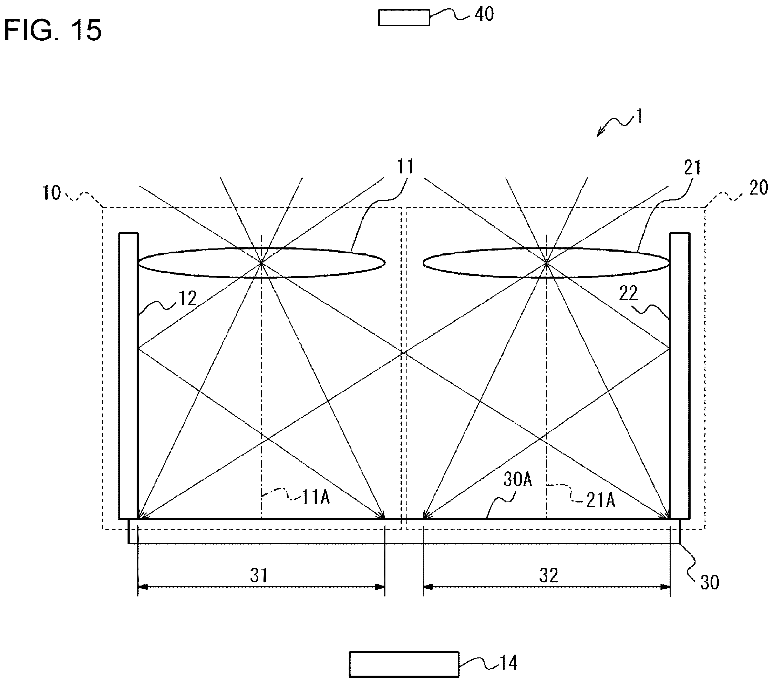

The imaging apparatus 1 according to the fourth configuration example will be described with reference to FIG. 15 to FIG. 18. FIG. 15 to FIG. 18 are diagrams same as, and/or similar to, FIG. 1 to FIG. 4, respectively, and the same elements are denoted by the same reference signs. To avoid redundancy, descriptions of elements same as, and/or similar to, those of the first configuration example will be omitted or simplified, and differences from the first configuration example will mainly be described.

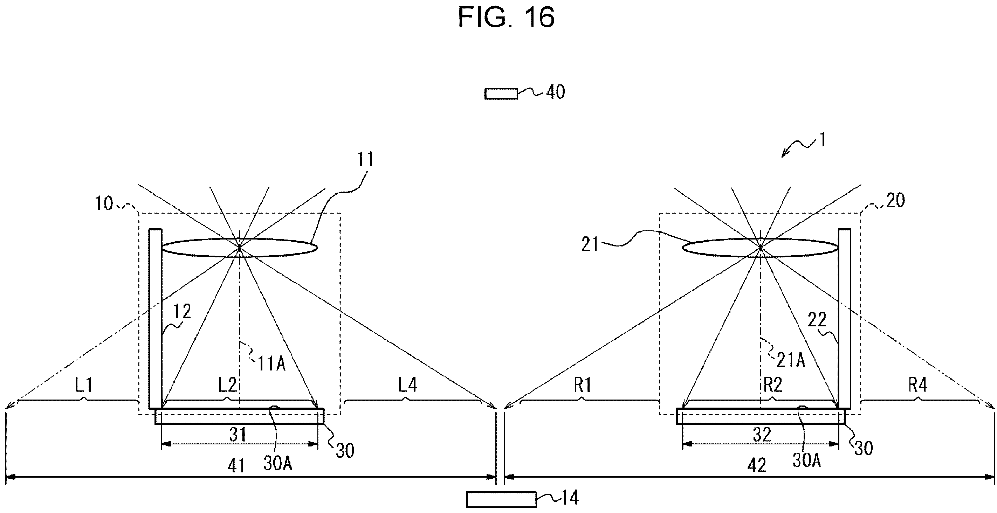

As illustrated in FIG. 15 and FIG. 16, the fifth optical element 13 and the sixth optical element 23 are not necessarily included in the imaging apparatus 1 as in the second configuration example. A portion of the first image 41 is formed on the first light-receiving region 31. A portion of the first image 41 is formed on a portion of the second light-receiving region 32. In other words, the first optical element 11 forms an image of the light or the light beam coming from the subject 40 as the first image 41 in a region wider than the first light-receiving region 31. A portion of the second image 42 is formed on the second light-receiving region 32. A portion of the second image 42 is formed on a portion of the first light-receiving region 31. In other words, the second optical element 21 forms an image of the light or the light beam coming from the subject 40 as the second image 42 in a region wider than the second light-receiving region 32.

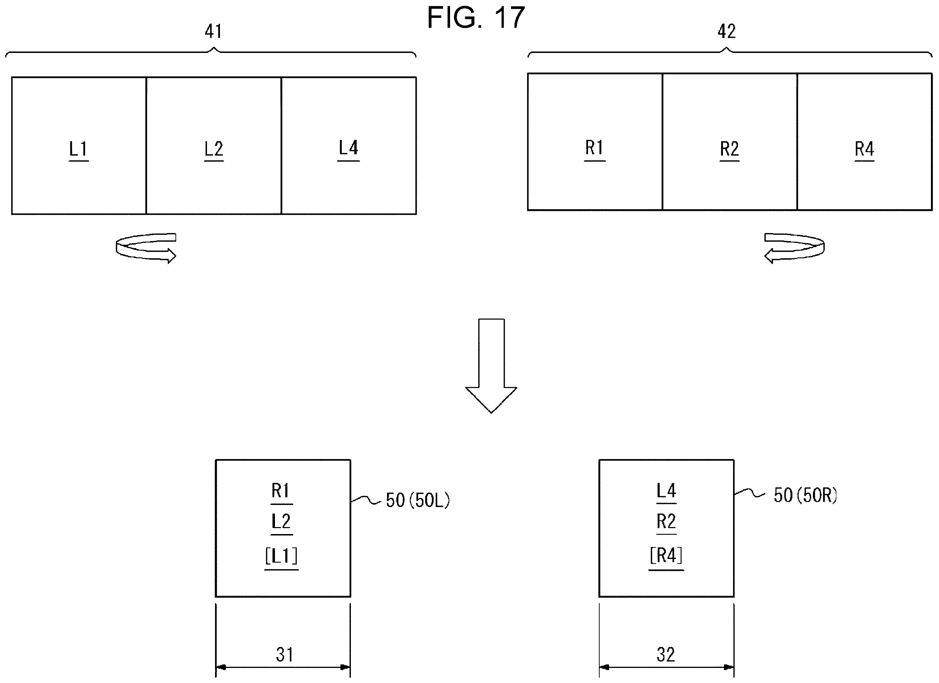

As illustrated in FIG. 17, the first image 41 includes the images L1, L2, and L4. The image L1 is folded back by the third optical element 12 and imaged on the first light-receiving region 31 as the inverted image [L1]. The inverted image [L 1] is superimposed on the image L2, which is an image formed on the first light-receiving region 31 by the light passing through the first optical element 11 without passing through another optical element. The image R1, which is a portion of the second image 42, is formed on the first light-receiving region 31. The image R1 is superimposed on the image L2, which is an image formed on the first light-receiving region 31 by the light passing through the first optical element 11 without passing through another optical element. The imaging element 30 generates the superimposed image 50L including the images [L1], L2, and R1.

As illustrated in FIG. 17, the second image 42 includes the images R1, R2, and R4. The image R4 is folded back by the fourth optical element 22 and imaged on the second light-receiving region 32 as an inverted image [R4]. The inverted image [R4] is superimposed on the image R2, which is an image formed on the second light-receiving region 32 by the light passing through the second optical element 21 without passing through another optical element. The image L4, which is a portion of the first image 41, is formed on the second light-receiving region 32. The image L4 is superimposed on the image R2, which is an image formed on the second light-receiving region 32 by the light passing through the second optical element 21 without passing through another optical element. The imaging element 30 generates the superimposed image 50R including the images L4, R2, and [R4].

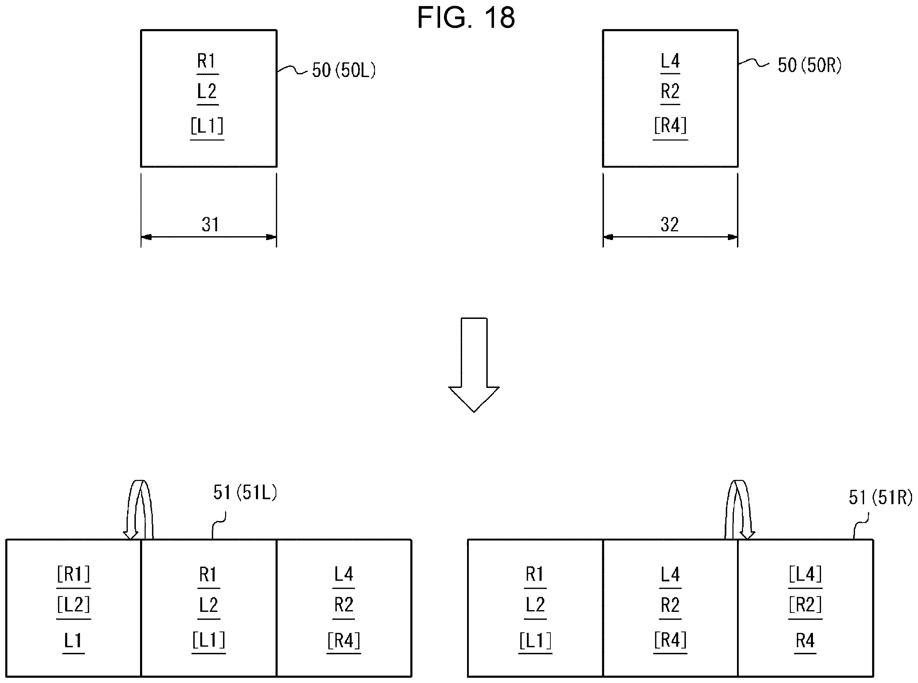

FIG. 18 is a diagram illustrating the conversion processing performed by the imaging apparatus 1 illustrated in FIG. 15. The controller 14 inverts a portion of the superimposed image 50L (the entire superimposed image 50L in the example illustrated in FIG. 18), the portion including [L1], in an outward direction and combines it. The controller 14 also extracts a portion of the superimposed image 50R (the entire superimposed image 50R in the example illustrated in FIG. 18), the portion including L4, and combines it in an outward direction opposite to the above-mentioned outward direction. The converted superimposed image 51L includes the images L1, L2, and L4 in the same arrangement as in the first image 41. In other words, although inverted images are superimposed, the converted superimposed image 51L is an image including correct position information of the subject 40.

The controller 14 inverts a portion of the superimposed image 50R (the entire superimposed image 50R in the example illustrated in FIG. 18), the portion including [R4], in an outward direction and combines it. The controller 14 also extracts a portion of the superimposed image 50L (the entire superimposed image 50L in the example illustrated in FIG. 18), the portion including R1, and combines it in an outward direction opposite to the above-mentioned outward direction. The converted superimposed image 51R includes the images R1, R2, and R4 in the same arrangement as in the second image 42. In other words, although inverted images are superimposed, the converted superimposed image 51R is an image including correct position information of the subject 40.

As in the first configuration example, the controller 14 calculates disparity of the subject 40 by comparing the converted superimposed images 51. As in the first configuration example, the controller 14 may separate a subject image captured only through the first optical element 11 or the second optical element 21 and a subject image captured through the first optical element 11 or the second optical element 21 and also through another optical element other than the first optical element 11 and the second optical element 21 from each other.

### (Fifth Configuration Example)

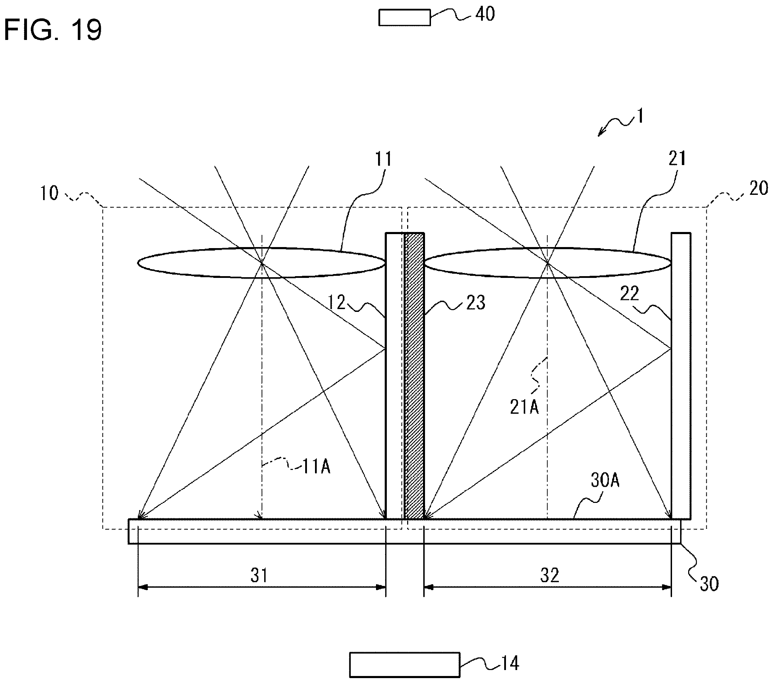

The imaging apparatus 1 according to the fifth configuration example will be described with reference to FIG. 19 to FIG. 22. FIG. 19 to FIG. 22 are diagrams same as, and/or similar to, FIG. 1 to FIG. 4, respectively, and the same elements are denoted by the same reference signs. To avoid redundancy, descriptions of elements same as, and/or similar to, those of the first configuration example will be omitted or simplified, and differences from the first configuration example will mainly be described.

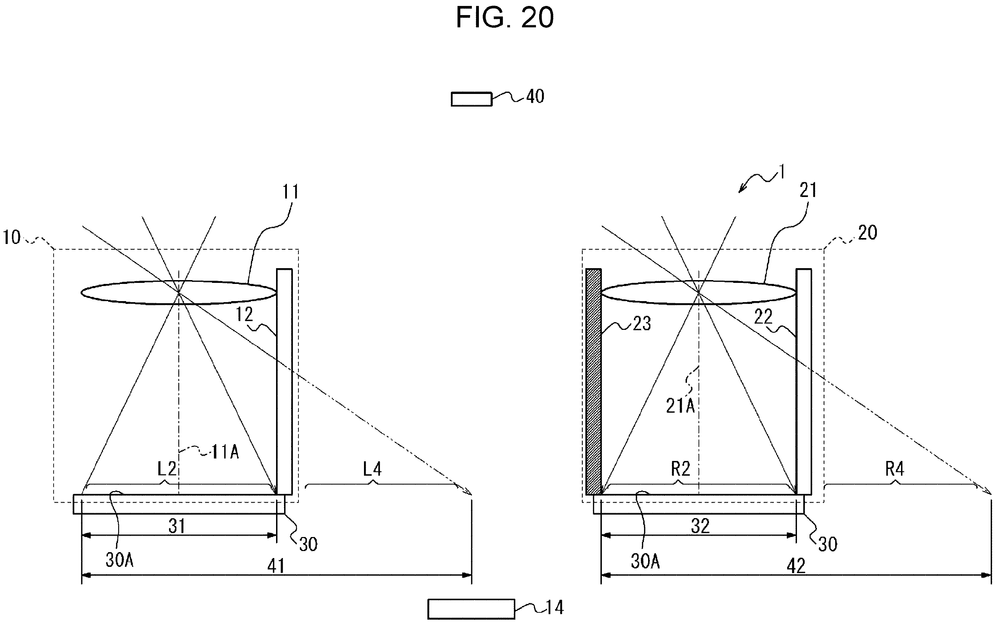

As illustrated in FIG. 19 and FIG. 20, in the imaging apparatus 1, the third optical element 12 may be moved to the position of the fifth optical element 13 in the first configuration example, and the fifth optical element 13 is not necessarily included. The third optical element 12 is configured as a mirror whose surface closer to the first light-receiving region 31 serves as a reflective surface. The imaging apparatus 1 may include the sixth optical element 23, which is a light-shielding member.

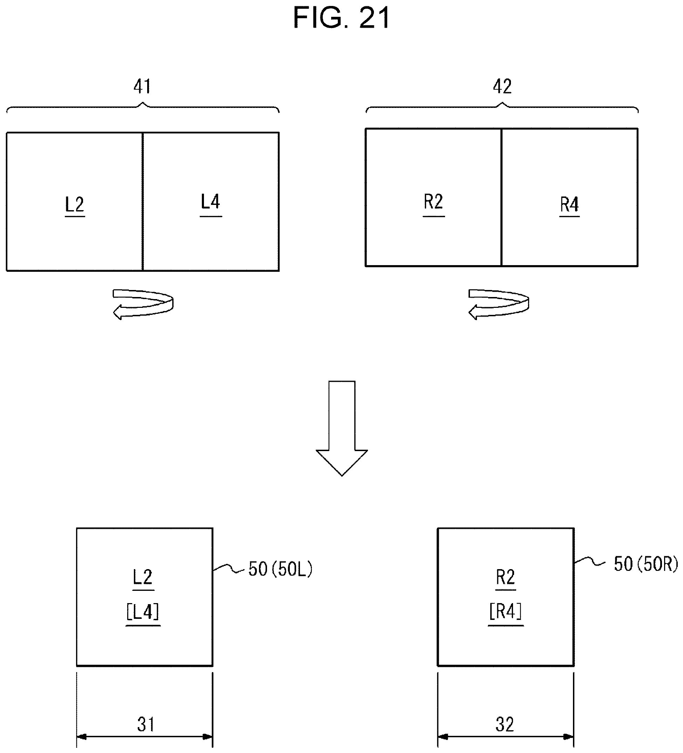

As illustrated in FIG. 21, the first image 41 includes the images L2 and L4. The image L4 is folded back by the third optical element 12 and imaged on the first light-receiving region 31 as the inverted image [L4]. The inverted image [L4] is superimposed on the image L2, which is an image formed on the first light-receiving region 31 by the light passing through the first optical element 11 without passing through another optical element. The imaging element 30 generates the superimposed image 50L including the images L2 and [L4].

As illustrated in FIG. 21, the second image 42 includes the images R2 and R4. The image R4 is folded back by the fourth optical element 22 and imaged on the second light-receiving region 32 as the inverted image [R4]. The inverted image [R4] is superimposed on the image R2, which is an image formed on the second light-receiving region 32 by the light passing through the second optical element 21 without passing through another optical element. The imaging element 30 generates the superimposed image 50R including the images R2 and [R4].

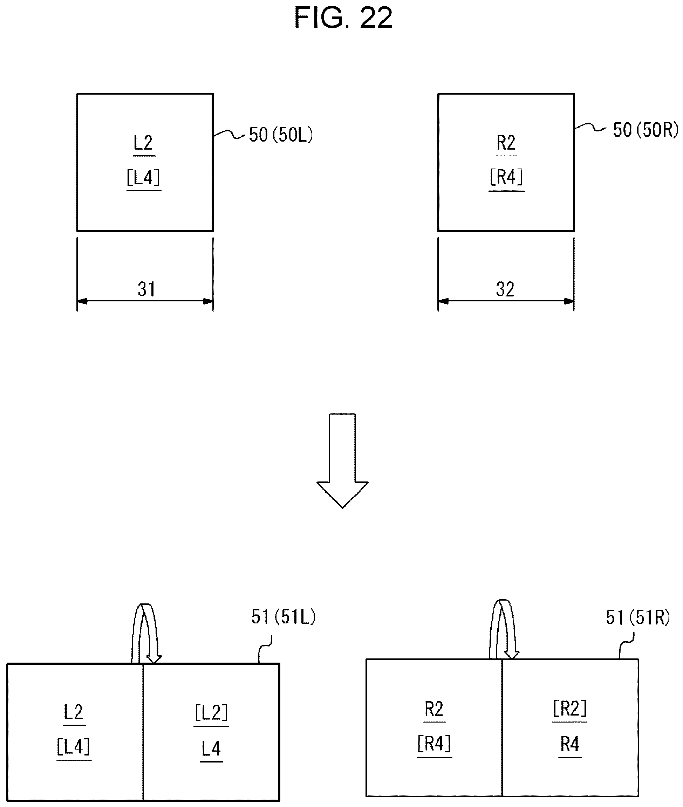

FIG. 22 is a diagram illustrating the conversion processing performed by the imaging apparatus 1 illustrated in FIG. 19. The controller 14 inverts a portion of the superimposed image 50L (the entire superimposed image 50L in the example illustrated in FIG. 22), the portion including [L4], in an outward direction and combines it. The converted superimposed image 51L includes the images L2 and L4 in the same arrangement as in the first image 41. In other words, although inverted images are superimposed, the converted superimposed image 51L is an image including correct position information of the subject 40.

The controller 14 inverts a portion of the superimposed image 50R (the entire superimposed image 50R in the example illustrated in FIG. 22), the portion including [R4], in an outward direction and combines it. The converted superimposed image 51R includes the images R2 and R4 in the same arrangement as in the second image 42. In other words, although inverted images are superimposed, the converted superimposed image 51R is an image including correct position information of the subject 40.

As in the first configuration example, the controller 14 calculates disparity of the subject 40 by comparing the converted superimposed images 51. As in the first configuration example, the controller 14 may separate a subject image captured only through the first optical element 11 or the second optical element 21 and a subject image captured through the first optical element 11 or the second optical element 21 and also through another optical element other than the first optical element 11 and the second optical element 21 from each other.

### (Sixth Configuration Example)

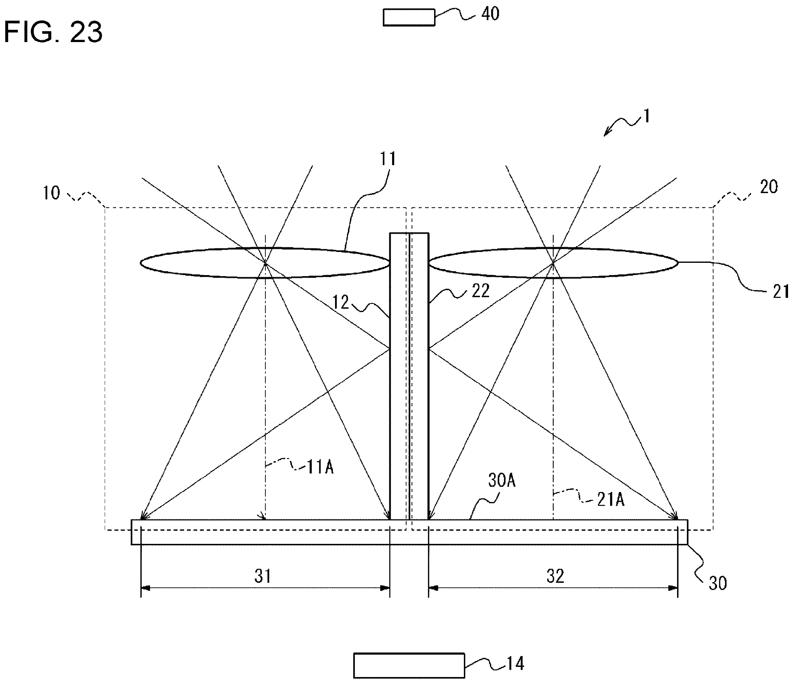

The imaging apparatus 1 according to the sixth configuration example will be described with reference to FIG. 23 to FIG. 26. FIG. 23 to FIG. 26 are diagrams same as, and/or similar to, FIG. 1 to FIG. 4, respectively, and the same elements are denoted by the same reference signs. To avoid redundancy, descriptions of elements same as, and/or similar to, those of the first configuration example will be omitted or simplified, and differences from the first configuration example will mainly be described.

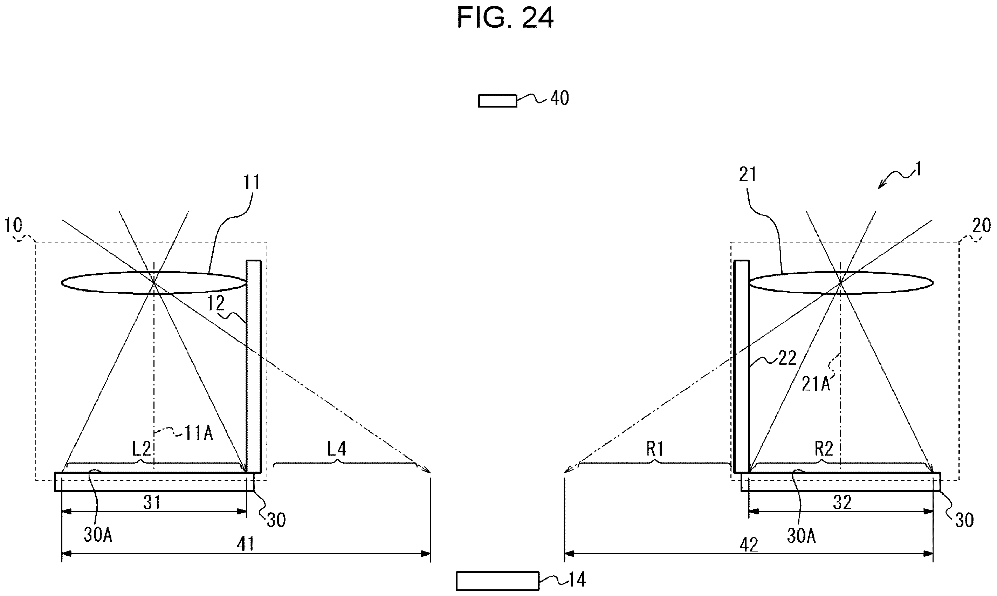

As illustrated in FIG. 23 and FIG. 24, in the imaging apparatus 1, the third optical element 12 may be moved to the position of the fifth optical element 13 in the first configuration example, and the fifth optical element 13 is not necessarily included. The third optical element 12 is configured as a mirror whose surface closer to the first light-receiving region 31 serves as a reflective surface. In the imaging apparatus 1, the fourth optical element 22 may be moved to the position of the sixth optical element 23 in the first configuration example, and the sixth optical element 23 is not necessarily included. The fourth optical element 22 is configured as a mirror whose surface closer to the second light-receiving region 32 serves as a reflective surface.

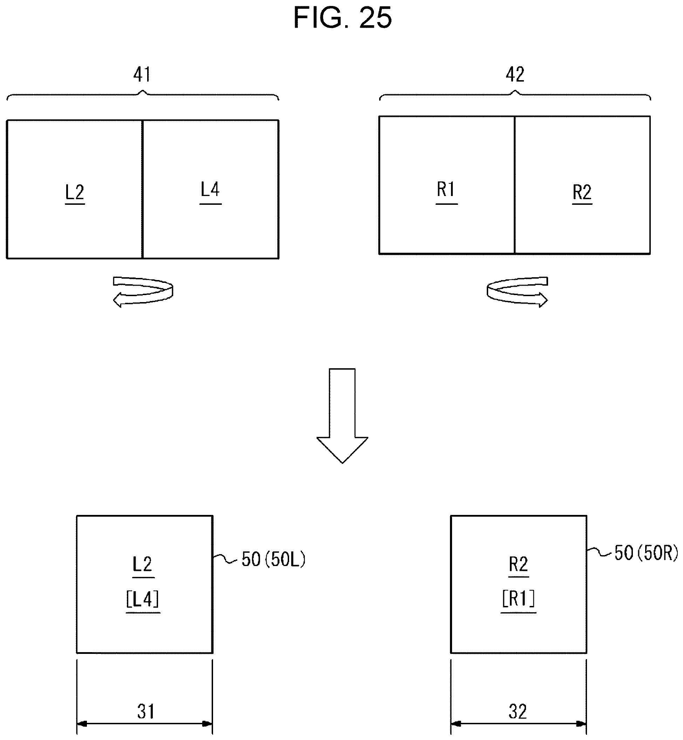

As illustrated in FIG. 25, the first image 41 includes the images L2 and L4. The image L4 is folded back by the third optical element 12 and imaged on the first light-receiving region 31 as the inverted image [L4]. The inverted image [L4] is superimposed on the image L2, which is an image formed on the first light-receiving region 31 by the light passing through the first optical element 11 without passing through another optical element. The imaging element 30 generates the superimposed image 50L including the images L2 and [L4].

As illustrated in FIG. 25, the second image 42 includes the images R1 and R2. The image R1 is folded back by the fourth optical element 22 and imaged on the second light-receiving region 32 as the inverted image [R1]. The inverted image [R1] is superimposed on the image R2, which is an image formed on the second light-receiving region 32 by the light passing through the second optical element 21 without passing through another optical element. The imaging element 30 generates the superimposed image 50R including the images [R1] and R2.

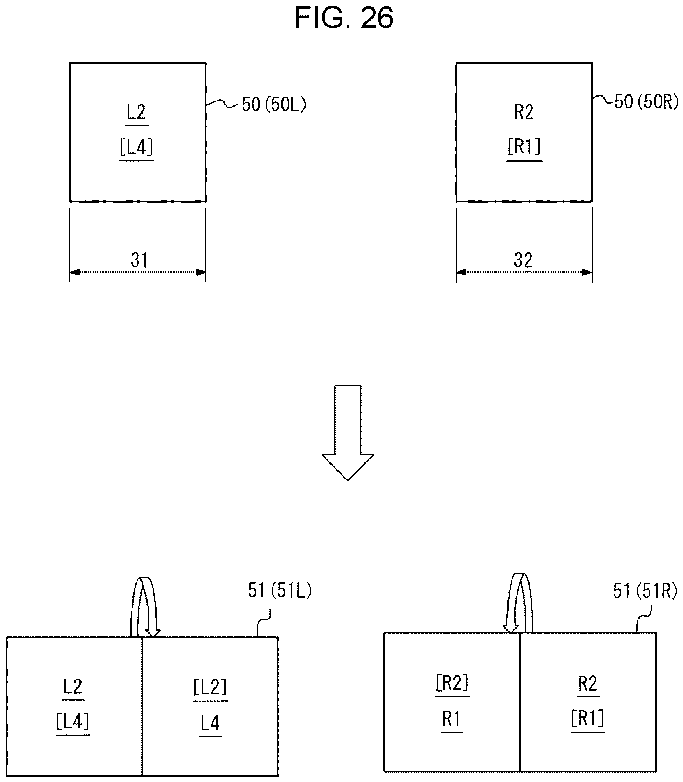

FIG. 26 is a diagram illustrating the conversion processing performed by the imaging apparatus 1 illustrated in FIG. 23. The controller 14 inverts a portion of the superimposed image 50L (the entire superimposed image 50L in the example illustrated in FIG. 26), the portion including [L4], in an outward direction and combines it. The converted superimposed image 51L includes the images L2 and L4 in the same arrangement as in the first image 41. In other words, although inverted images are superimposed, the converted superimposed image 51L is an image including correct position information of the subject 40.

The controller 14 inverts a portion of the superimposed image 50R (the entire superimposed image 50R in the example illustrated in FIG. 26), the portion including [R1], in an outward direction and combines it. The converted superimposed image 51R includes the images R1 and R2 in the same arrangement as in the second image 42. In other words, although inverted images are superimposed, the converted superimposed image 51R is an image including correct position information of the subject 40.

Before calculating disparity of the subject 40, the controller 14 may separate a subject image captured only through the first optical element 11 or the second optical element 21 and a subject image captured through the first optical element 11 or the second optical element 21 and also through another optical element other than the first optical element 11 and the second optical element 21 from each other.

### (Other Forms of Reflective Surface)

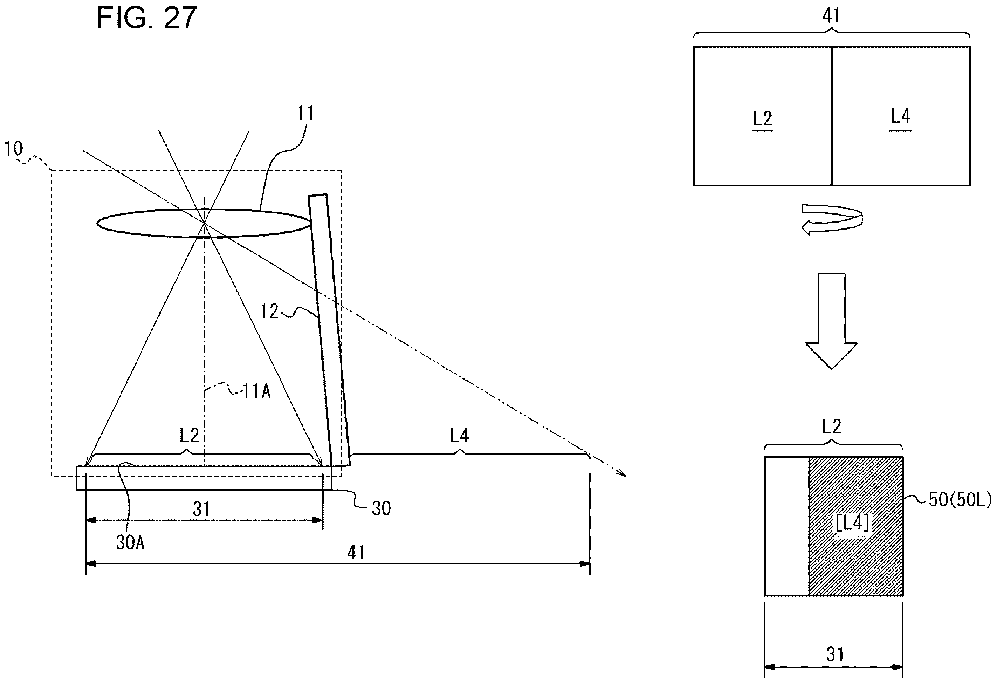

As illustrated in FIG. 27, the reflective surface of the third optical element 12, which serves as a mirror, may be inclined with respect to the optical axis 11A to be in an inwardly inclined position facing an image plane of the first optical element 11. In this case, the reflective surfaces of the fourth optical element 22, the fifth optical element 13, and the sixth optical element 23, each of which serves as a mirror, may be in an inwardly inclined position. Such an inwardly inclined position may achieve a reduction in the entire size of each of the optical devices compared with a configuration in which the reflective surface of each mirror is parallel to the optical axis 11A or 21A. Each mirror may be, for example, a plane mirror, a curved mirror, a DMD (digital mirror device), or a Fresnel mirror. As another example, the reflective surface of the third optical element 12 serving as a mirror may be inclined with respect to the optical axis 11A to be in an outwardly inclined position facing the first optical element 11. In this case, the reflective surfaces of the fourth optical element 22, the fifth optical element 13, and the sixth optical element 23, each of which serves as a mirror, may be in an outwardly inclined position. Such an outwardly inclined position may achieve a wider angle of view of each of the optical devices compared with a configuration in which the reflective surface of each mirror is parallel to the optical axis 11A or 21A.

As illustrated in FIG. 27, when the third optical element 12 is inwardly inclined, the image [L4] reflected by the third optical element 12 and formed on the first light-receiving region 31 is reduced in size relative to the image L2 that is an image formed without passing through the third optical element 12. When an image reflected by a mirror is reduced in size or enlarged, the controller 14 generates the converted superimposed images 51 by including an enlargement process or a reduction process in the conversion processing. In other words, each of the converted superimposed images 51 is generated such that the reduction or enlargement of the image caused by the inclination of an optical element is canceled out. When the reflective surface of the mirror is a curved surface or the like and the position of the image reflected by the mirror is displaced, the controller 14 generates the converted superimposed images 51 by including a coordinate-conversion process in the conversion processing. In other words, each of the converted superimposed images 51 is generated such that displacement of the image position is canceled out. The image [L4] illustrated in FIG. 27 becomes a correct image in the converted superimposed images 51 through such an enlargement process, reduction process, or coordinate-conversion process. In contrast, a portion of the image L2, which is processed together, is deformed and becomes an incorrect image. The controller 14 can more efficiently perform disparity calculation and subject image separation not only based on the direction of calculated disparity but also by using deformation of an image caused by the enlargement process, the reduction process, or the coordinate-conversion process.

As described above, according to the present embodiment, the imaging apparatus 1 and the information processing method can obtain an image having the resolution of a long-focus optical system while maintaining a wide angle.

According to the present embodiment, in the imaging apparatus 1 and the information processing method, disparity of the subject 40 can be calculated by using the converted superimposed images 51 before separating a subject image. For example, in a technique of the related art, processing to separate a subject image is performed on each of the two images, which are the superimposed image 50L and the superimposed image 50R, and then disparity of the subject 40 is calculated by using two images resulting from the separation process. Compared with such a technique of the related art, the amount of computation can be reduced.

An embodiment according to the present disclosure has been described with reference to the drawings and examples. However, it is to be noted that variations and various alterations can be made on the basis of the present disclosure by those skilled in the art. Therefore, it should be noted that such variations and alterations are included within the scope of the present disclosure. For example, the functions and the like included in each component or the like can be rearranged as long as there is no logical contradiction, and multiple components and the like can be combined into one or can be divided. It is to be understood that these variations and alterations are also included within the scope of the present disclosure.

All of the constituent elements described in the present disclosure and/or all of the disclosed methods or all of the steps of the process can be combined in any combination, except for combinations in which their features would be mutually exclusive. Each of the features described in the present disclosure can be replaced by an alternative feature serving the same, equivalent, or similar purpose, unless explicitly stated to the contrary. Therefore, unless explicitly stated to the contrary, each of the disclosed features is merely an example of a comprehensive series of the same or equivalent features.

An embodiment according to the present disclosure is not limited to any of the specific configurations of the above-described embodiments. An embodiment according to the present disclosure can be extended to all the novel features described in the present disclosure, to any combination of these novel features, to all the novel methods or the steps of the process described in the present disclosure, or to any combination of these novel methods or the steps of the process.

In the present disclosure, the terms "first", "second", and the like are identifiers used to distinguish the components from each other. In the present disclosure, the components distinguished by the terms "first", "second", and the like are interchangeable with respect to their numerical identifiers. For example, the identifiers "first" and "second" can be exchanged between the first optical system 10 and the second optical system 20. Exchanging of the identifiers take place simultaneously. Even after exchanging the identifiers, the components are distinguishable from each other. The identifiers can be omitted. Components whose identifiers are omitted are distinguishable from each other by reference signs. In the present disclosure, the descriptions of the identifiers such as "first" and "second" alone are not to be used for interpretation of the order of the components or as grounds for the presence of lower-numbered identifiers.

Although information processing using the imaging apparatus 1 has been described, an embodiment of the present disclosure can also take the form of a program or a storage medium on which the program is recorded. Examples of the storage medium include an optical disc, a magneto-optical disc, a CD-ROM, a CD-R, a CD-RW, a magnetic tape, a hard disk, and a memory card.

The implementation of the program may be application programs such as object code compiled by a compiler and program code executed by an interpreter, but is not limited thereto. For example, the implementation of the program may include the form of a program module incorporated into an operating system. In addition, the program may or may not be configured such that all processing is performed solely by a CPU on a control substrate. The program may be configured such that a portion or all of the processing is performed by another processing unit implemented on an expansion board or an expansion unit added to the substrate, as necessary.

### REFERENCE SIGNS

1 imaging apparatus
10 first optical system
11 first optical element
11A optical axis
12 third optical element
13 fifth optical element
20 second optical system
21 second optical element
21A optical axis
22 fourth optical element
23 sixth optical element
30 imaging element
30A light-receiving region
31 first light-receiving region
32 second light-receiving region
40 subject
41 first image
42 second image
50, 50L, 50R superimposed image
51, 51L, 51R converted superimposed image

## Claims

1. An imaging apparatus comprising:
a first optical element that forms, as a first image, an image of light coming from a subject on a first light-receiving region of an imaging element;
a second optical element that forms, as a second image, an image of the light coming from the subject on a second light-receiving region of the imaging element, the second light-receiving region being adjacent to the first light-receiving region;
a third optical element that reflects at least part of light traveling from the first optical element toward outside the first light-receiving region such that the at least part of the light travels toward inside the first light-receiving region;
a fourth optical element that reflects at least part of light traveling from the second optical element toward outside the second light-receiving region such that the at least part of the light travels toward inside the second light-receiving region; and
a controller that performs conversion processing including at least inversion and combination on a superimposed image of the first light-receiving region and on a superimposed image of the second light-receiving region, and calculates disparity of the subject by comparing the superimposed images having undergone the conversion processing.

2. The imaging apparatus according to claim 1, comprising:
at least one of a fifth optical element or a sixth optical element,
wherein the fifth optical element is disposed to face the third optical element and shields at least part of the light traveling from the first optical element toward outside the first light-receiving region or reflects the at least part of the light such that the at least part of the light travels toward inside the first light-receiving region, and
wherein the sixth optical element is disposed to face the fourth optical element and shields at least part of the light traveling from the second optical element toward outside the second light-receiving region or reflects the at least part of the light such that the at least part of the light travels toward inside the second light-receiving region.

3. The imaging apparatus according to claim 1 or 2,
wherein the controller separates a subject image captured only through the first optical element or the second optical element and a subject image captured through the first optical element or the second optical element and also through another optical element other than the first optical element and the second optical element from each other, based on a direction of a calculated disparity.

4. An information processing method to be performed by an imaging apparatus comprising a first optical element that forms, as a first image, an image of light coming from a subject on a first light-receiving region of an imaging element, a second optical element that forms, as a second image, an image of the light coming from the subject on a second light-receiving region of the imaging element, the second light-receiving region being adjacent to the first light-receiving region, a third optical element that reflects at least part of light traveling from the first optical element toward outside the first light-receiving region such that the at least part of the light travels toward inside the first light-receiving region, a fourth optical element that reflects at least part of light traveling from the second optical element toward outside the second light-receiving region such that the at least part of the light travels toward inside the second light-receiving region, and a controller,
wherein the controller
performs conversion processing including at least inversion and combination on a superimposed image of the first light-receiving region and on a superimposed image of the second light-receiving region, and
calculates disparity of the subject by comparing the superimposed images having undergone the conversion processing.
